(19) Europäisches Patentamt
European Patent Office
Office européen des brevets

(11) **EP 1 623 096 B1**

(12) **EUROPEAN PATENT SPECIFICATION**

(45) Date of publication and mention
of the grant of the patent:
**21.07.2010 Bulletin 2010/29**

(21) Application number: **03719072.5**

(22) Date of filing: **13.02.2003**

(51) Int Cl.:
***F01C 1/077*** (2006.01)  ***F02B 53/00*** (2006.01)

(86) International application number:
**PCT/IN2003/000025**

(87) International publication number:
**WO 2004/072442 (26.08.2004 Gazette 2004/35)**

(54) **REVOLVING PISTON INTERNAL COMBUSTION ENGINE**

BRENNKRAFTMASCHINE MIT ROTIERENDEM KOLBEN

MOTEUR A COMBUSTION INTERNE A PISTON ALTERNATIF

(84) Designated Contracting States:
**AT BE BG CH CY CZ DE DK EE ES FI FR GB GR
HU IE IT LI LU MC NL PT SE SI SK TR**

(43) Date of publication of application:
**08.02.2006 Bulletin 2006/06**

(73) Proprietor: **Ambardekar, Vishvas
Pune 411 009 (IN)**

(72) Inventor: **Ambardekar, Vishvas
Pune 411 009 (IN)**

(74) Representative: **Roos, Peter et al
Klinger & Partner GbR
Bavariaring 20
D-80336 München (DE)**

(56) References cited:
**WO-A-00/79102      WO-A-03/008764
DE-C- 19 814 742      US-A- 3 769 946
US-A- 5 433 179      US-B1- 6 457 452**

EP 1 623 096 B1

**Description**

The present invention relates to a revolving piston device (e.g. a revolving piston internal combustion engine) according to the preamble of claim 1.

Such a device is known from US 2,071,528. In the known device, the coupling mechanism has axes of rotation that are revolving together with the pistons.

The known device has some serious drawbacks with respect to the linkage that decides the velocity profile of one revolving assembly with respect to the other revolving assembly. Especially, the known linkage has a complicated structure due to the provision of two separate crank mechanisms each revolving together with the pistons. Therefore, the linkage has a lot of mass revolving around the axis of the ring cylinder and simultaneously rotating about corresponding revolving axes. This also makes it difficult to operate the device at higher speeds. This leads to high losses and high vibration in the operation of the device. Further, great forces are exerted on the individual components of this kind of coupling mechanism so that this coupling mechanism must be designed with costly components having a remarkable mechanical strength.

GB 499,553 shows a similar coupling mechanism for a revolving piston device, namely having axes of rotation that are revolving together with the pistons. Accordingly, this prior art device posesses essentially the same drawbacks with respect to the linkage as the coupling mechanism known from above mentioned US 2,071,528.

US 6,457,452 B1 describes a coupling mechanism having gears with fixed axes of rotation. This coupling mechanism, however, constitutes a complicated structure. The device does not have an output shaft connected to one of the two revolving assemblies. Rather, it necessitates an additional drive and output shaft. Further, an advantageous direct drive coupling between the revolving assemblies is not possible.

DE 198 14 742 C1 discloses a coupling mechanism for a revolving piston motor incorporating oval gears in a more or less complicated arrangement.

US 3,769,946 discloses a coupling mechanism for a revolving piston device incorporating second order elliptical gears. The device does not have an output shaft connected to one of the two revolving assemblies.

Against this background, it is the object of the present invention to provide a revolving piston device according to the preamble of claim 1, in which the linkage between the revolving assemblies has a structure that is less complicated and leads to less losses and vibration in operation of the device.

This object is solved with a revolving piston device having the features of claim 1. The dependent claims are directed to advantageous developments of the invention.

It is a first essential feature of the invention that the two revolving assemblies each comprise a ring gear with internal or external teeth. These teethed ring gears are used in connection with the coupling between the revolving assemblies and revolve together with the assemblies.

As to the reduction of losses and vibration, it is an essential feature of the invention that the linkage is mounted on fixed axes (with respect to the ring cylinder). A very simple structure of the linkage is here realized by the provision of two elliptical gears in mesh.

The invention is further described in the following by means of an exemplary embodiment and some of possible modifications thereof, with reference to the attached drawings.

**Background to the embodiment:**

Conventional internal combustion engines, consisting of a cylinder, a crank, a connecting rod and a piston, are used very widely, in day-to-day life. These reciprocating piston engines are designed with different capacities for various applications using different types of fuels. To reduce the work loss due to the reciprocating piston in engines, different engines were made without a reciprocating piston. In such efforts, a Wenkel engine was designed with a rotary piston, that rotates continuously in one direction, thus reducing the losses which otherwise would have caused by the reciprocating motion of the piston in a conventional reciprocating piston internal combustion engine. In these Wenkel engines, appropriate cooling and sealing have become very difficult and probably for these reasons the engine could not become very popular in industries. Gas turbines are another type of non-reciprocating piston engines and are widely used, these turbines have very high values of power to weight ratio and work most efficiently at very high speeds and thus generally not used for automobiles. A need for an engine without a reciprocating piston, to have easy cooling and should be efficient to operate at lower speeds, is always felt. Present work is related to a device that has a pair of revolving pistons instead of a reciprocating or rotary piston.

**Introduction to the embodiment:**

To reduce the losses of a conventional reciprocating piston engine and to facilitate easy cooling, a new type of engine is conceptualized here. A new approach is used to make the present concept engine to utilize, easy sealing and easy cooling properties of a reciprocating piston engine, and low vibration and low losses properties of a rotary piston engine. It is more appropriate to call the present concept engine as a "revolving piston engine" instead of a reciprocating piston engine or a rotary piston engine. Only twin piston, revolving piston engine is explained here with the help of few drawings. On the same principle a revolving piston engine can be made without much difficulty, to have one or more number of pistons. This type of engines can be used in automobiles, power generation, aero industries, battlefield tanks, and in many other applications. The same concept, with appropriate design changes, can be used to develop a revolving piston air compressor.

**Nomenclature for drawing sheets 1 to 4:**

**FIG.1**: Schematic representation of the twin piston, "revolving piston engine" showing the probable locations of the inlet and exhaust ports and also showing TDC and BDC equivalent for the engine. The dotted lines show the BDC equivalent position.

**FIG.2**: The pitch ellipses for the elliptical gear pair to maintain the varying speed ratio between the revolving piston and the revolving cylinder head. Both the elliptical gears are rotating with respect to the axis passing through the geometrical focal points, 30 and 32, of their pitch ellipses respectively. Eccentricity of the pitch ellipses used for the elliptical gears is approximately 0.38. Positions of the ellipses with dotted lines give a speed ratio of unity.

**FIG.3**: Curve showing relationship between instantaneous speed ratio of gear 31 to gear 29 and the rotation 39 of gear 29 from 0° to 720° in the direction 41 in FIG.2.

The negative values in the curve show that the two gears rotate in opposite direction.

**FIG.4:** Schematic representation of the revolving piston engine showing the probable gear arrangement and the direction of motion of various main components.

**Engine components:**

The present twin piston, revolving piston engine consists of following major components:

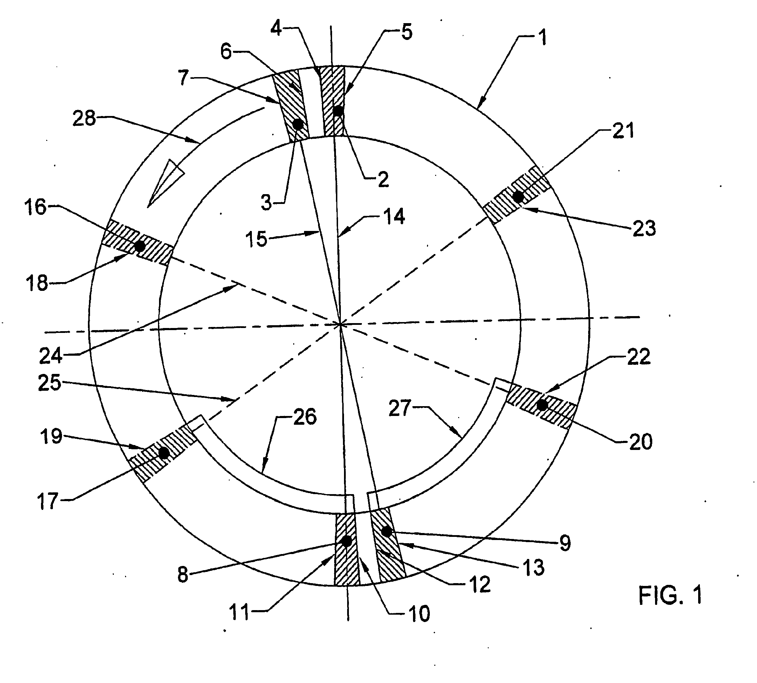

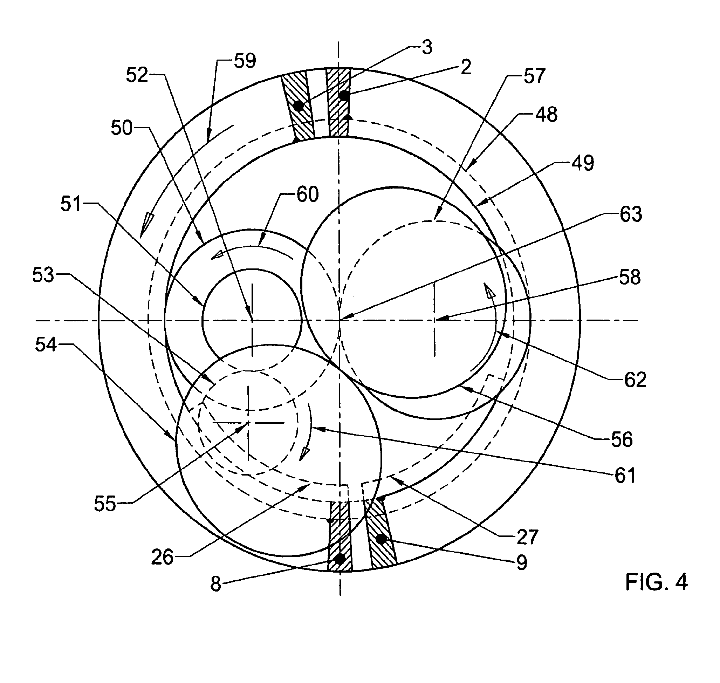

**1. Hollow ring cylinder**: This is a hollow circular ring of any suitable cross-section as represented by 1 in FIG.1. Revolving a suitable cross-section around an axis, which becomes the common axis, outside the cross-section makes the ring cylinder's geometric shape. This hollow ring is analogous to the cylinder of a conventional reciprocating piston engine, in which the piston slides. Here after the hollow ring cylinder is referred to as "ring cylinder" for easy understanding. The ring cylinder 1 can have any cross-section to give ease of sealing and ease of manufacturing. This ring cylinder may be made of many parts joined together. It has two main components, one is fixed and the other is revolving. The revolving component consists of two assemblies revolving around the common axis that passes through the center, represented by 63 in FIG.4, of the ring cylinder. These two revolving assemblies constituted by ring gears, as represented by 48 and 49 in FIG.4, revolve at different angular speeds and are coupled to each other with a mechanism that regulates the differential angular speed.

**2. Revolving Pistons:** In FIG.1 the two revolving pistons are represented by 3 and 9, in one position and by 17 and 21, in another position. These revolving pistons slide in the ring cylinder 1 and thus revolve around the common axis that passes through the center 63 of the ring cylinder. These revolving pistons are diametrically opposite to each other and are connected to the ring gear 49. The shape of these revolving pistons should suit the sealing requirements of the ring cylinder. As these are analogous to the piston of the conventional reciprocating piston engine, here after these are referred to as pistons instead of revolving pistons.

**3. Revolving Cylinder Head:** These are very similar to the pistons but as these act like cylinder head in a conventional reciprocating piston engine, these are called as revolving cylinder heads. In FIG.1, the two revolving cylinder heads are represented by 2 and 8, in one position and by 16 and 20, in another position. These revolving cylinder heads slide in the ring cylinder 1 and thus revolve around the common axis that passes through the center 63 of the ring cylinder. These revolving cylinder heads are diametrically opposite to each other and are connected to the ring gear 48. The shape of these revolving cylinder heads should suit the sealing requirements of the ring cylinder. These revolving cylinder heads are analogous to the cylinder head of a conventional reciprocating piston engine, as the active volume is trapped between the piston and these parts, here after these parts are referred to as cylinder heads instead of revolving cylinder heads.

**4. Ring Gear Supporting the Revolving Pistons:** This is a ring gear assembly with either internal or external gear teeth. For the present engine this ring gear is chosen to have internal gear teeth. The pistons are mounted on this ring gear. This ring gear may form a portion of the inner walls of the ring cylinder and is free to revolve around the common axis that passes through the center of the ring cylinder. Item 49 in FIG.4 represent this ring gear. In FIG. 1, 15 and 25, represent this ring gear as rigid link in two of its different positions. Here after this ring gear assembly is referred to as ring gear-1.

**5. Ring Gear Supporting the Revolving Cylinder Heads:** This is another ring gear assembly with either internal or external gear teeth. For the present engine this ring gear is also chosen to have internal gear teeth. The cylinder heads are mounted on this ring gear. This ring gear may form a portion of the inner walls of the ring cylinder and is free to revolve around the common axis that passes through the center of the ring cylinder. Item 48 in FIG.4 represent this ring gear. In FIG.1, 14 and 24, represent this ring gear as rigid link in two of its different positions. Here after this ring gear assembly is referred to as ring gear-2.

**6. Linkage to constrain the movement of the two ring gears:** This linkage is very important component of the revolving piston engine. This linkage decides the velocity profile of ring gear-2 with respect to that of ring gear-1. For the present engine two elliptical gears in mesh, with their axes of rotation passing through the geometric focus point of their respective pitch ellipses, are used for the linkage purpose. In addition, few circular gears are used in series to obtain the direction of rotation and the overall speed ratio as desired. With this linkage it should be possible to rotate both the ring gears in same direction, with varying speed of ring gear-2 for a constant speed of ring gear-1 and keeping same period for both the ring gears to complete their one revolution. It is possible to use other linkages for obtaining the desired varying speeds; one such linkage could be a four bar linkage operating as double crank mechanism.

**Principle Of Operation:**

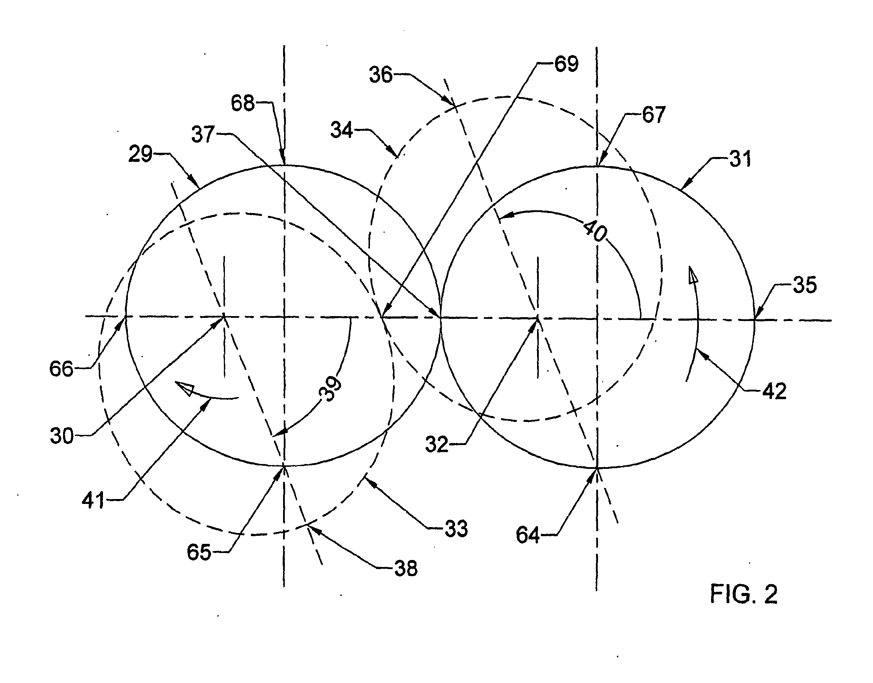

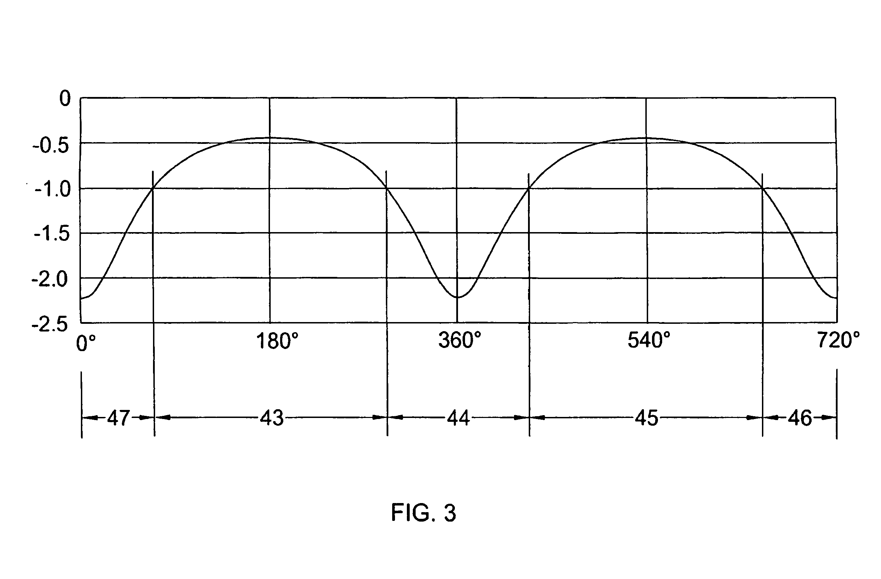

To understand the operation of the engine, it is necessary to understand the functioning of the two elliptical gears. The pitch ellipse used for the two elliptical gears has eccentricity of approximately 0.38. Items 29 and 31, in FIG. 2, represent the elliptical gears. The instantaneous speed ratio between gear 31 to gear 29, with their axes of rotation passing through their respective focal points 32 and 30, with respect to the rotation 39 of the gear 29 in direction shown by 41, is plotted in FIG.3. The rotation 40 of gear 31, corresponding to the rotation 39 of gear 29 can be calculated from the geometry of the pitch ellipses. In FIG.3, the horizontal axis represents the rotation 39 of gear 29 in direction 41 from 0° to 720° and the vertical axis represent the instantaneous speed ratio between gear 31 to gear 29. It can be seen from FIG.3 that the speed ratio varies approximately from -2.22 to -0.45. The negative speed ratio indicates that the direction of rotation 42 of gear 31 is opposite to direction of rotation 41 of gear 29. As both the elliptical gears are identical, they have equal number of teeth and thus simultaneously complete their one revolution. In FIG.3, it can be seen that at points the speed ratio obtained is unity, at that moment both the elliptical gears 29, 31 rotate at the same instantaneous speed. These positions of the two ring gears, when the speed ratio is unity, are analogous to the TDC and BDC positions in the conventional reciprocating piston engine. The piston and corresponding cylinder head are at closest and farthest to each other in these positions of TDC and BDC respectively.

**Engine Kinematics Construction:** The engine has one hollow ring cylinder, represented by 1 in FIG.1, consisting of fixed and revolving parts. The fixed part of the ring cylinder 1 is used for providing cooling to the cylinder and also has intake port 27 and exhaust port 26, connected to it. The revolving parts of the ring cylinder 1 are mainly made of two ring gears, namely ring gear-1 and ring gear-2. These ring gears also form a part of the inner walls of the ring cylinder. The pistons and the cylinder heads are integral parts of the ring gears assemblies and thus the ring gears revolve with the pistons and the cylinder heads respectively. As the ring gears revolve with the piston and the cylinder heads, proper design of these ring gears can make sealing of the piston and cylinder heads less difficult. The ring gear 49, which has internal teeth, is connected with a spur gear 50 with a speed ratio of 1:2. This spur gear has fixed axis 52 and has another co-axial gear 51 rigidly connected to it. The gear 51 drives another spur gear 53, with speed ratio of unity, having another fixed axis 55. Gear 53 has an elliptical gear 54 rigidly connected to it with the axis 55 passing through the focus of the pitch ellipse of the elliptical gear 54. The elliptical gear 54 drives another elliptical gear 56, which has its fixed axis of rotation 58 passing through the focus of its pitch ellipse. The elliptical gear 56 is rigidly connected to a co-axial spur gear 57. This gear 57 drives the ring gear-2. The speed ratio between the gear 57 and ring gear-2 is 2:1. One flywheel, not shown in the figures, of appropriate size is connected to the ring gear-1 that supports the revolving pistons. Thus the ring gear-1 rotates at half the speed of the elliptical gear 54 and the ring gear-2 rotates at half the speed of the elliptical gear 56. The full gear train ensures that ring gear-1 and ring gear-2 rotate in the same direction. Arrows 59, 60, 61 and 62 show the direction of rotation of different gears. The elliptical gears 54 and 56 are assembled in such a way that they have instantaneous speed ratio of unity when the pistons and the corresponding cylinder heads are closest to each other and the speed of the elliptical gears 56 is tending to reduce as compared to the speed of gear 54 as the gears rotate in the direction shown by 62 and 61 i.e. as the ring gears rotate in the direction shown by 59. It is necessary to mention here that the linkage used here including all the gears for motion transfer from the ring gear-1 to ring gear-2 make a positive drive, as to have motion without slip. Thus the ring gear-1 drives the ring gear-2 with the desired speed variation. The elliptical gear 54 and 56 in mesh thus ensures the differential speeds between pistons and the cylinder heads. It is important to note that the linkage with elliptical gears can be replaced by some other linkage; one such probable linkage could be an appropriate four bar linkage operating as double crank mechanism. An output shaft, which is not shown, is connected to the ring gear-1.

**Sequence of operation:**

The gear teeth for all the gears are not shown, instead only pitch circles and pitch ellipses are shown for easy understanding. Consider the piston and cylinder head pair 3 and 2, in FIG.1 and in FIG.4. The pitch ellipses of gears 31 and 29 are shown separately for easy understanding, otherwise elliptical gears 56 and 54 have similar pitch ellipses as represented by 31 and 29, and all have the same eccentricity. Thus the curve in FIG.3 is equally applicable for the elliptical gear pair 56, 54. Thus in FIG.3, for the portion 43 of the curve, when the speed ratio is less than unity, the elliptical gear 56 rotates slower than the elliptical gear 54 and thus the ring gear-2 and the cylinder head 2 revolves at a slower speed than the speed of revolution of the ring gear-1 and the piston 3. Thus the volume between the faces 4 and 6 keeps on increasing for the portion 43 of the FIG.3, while revolving in the direction as shown by 28. The piston and the cylinder head in positions at the start of the portion 43 of the curve in FIG.3 are represented by 3, 2 and in positions at the end of portion 43 are represented by 17, 16, in FIG.1, respectively. Similarly the other pair of piston and the cylinder head 9 and 8 in positions at the start of portion 43 attains the positions of piston and cylinder head 21 and 20 respectively, at the end of portion 43 in FIG.3. The positions of the pistons and cylinder heads at the end of portion 43 are the starting positions for the portion 44 in FIG.3. At the end of the portion 44 in FIG.3, piston 3 attains position of piston 9 and piston 9 attains position of piston 3, similarly cylinder head 2 attains the position of cylinder head 8 and cylinder head 8 attains position of cylinder head 2 as represented in FIG.1. Portion 45 in FIG.3 is same as portion 43, with the piston - cylinder head pairs 3, 2 and 9, 8 have interchanged their respective positions. Similarly the portion 46 and 47 together is similar to the portion 44, with piston - cylinder head pair 3, 2 attains positions of piston and cylinder head 21, 20 respectively at the start of the portion 46 and again attains positions of piston and cylinder head 3, 2 at the end of portion 47. Similarly 9, 8 attain positions 17, 16 at the start of portion 46 and again attain positions 9, 8 at the end of the portion 47 respectively. The cycle continues to repeat for further revolutions of the ring gears. Thus for one complete revolution of a piston and cylinder head the elliptical gears require two complete revolutions.

For simplicity, piston - cylinder head pair 3, 2 is called first pair and the pair 9, 8 is called the second pair. In FIG.3, portion 43 represents the power stroke for first pair and at the same time intake stroke for the second pair. Similarly, portion 44 represents exhaust stroke for first pair and compression stroke for the second pair; portion 45 represents intake stroke for first pair and power stroke for the second pair; portion 46, 47 together represent compression stroke for first pair and exhaust stroke for the second pair.

The fuel ignition should take place appropriately after start of portion 43 or portion 45 for the respective pair. The time delay between start of the portion 43 or 45 and the fuel ignition is to be selected very appropriately and can be varied with engine speed. As the ignition takes place, in the confined space between faces 4 and 6 or in a specially designed combustion chamber outside the confined space, at the time of ignition as stated above, pressure is developed between the two faces forcing them to move apart. Any motion after start of portion 43 or 45, in the direction opposite to 28 will cause the two faces to come closer, this will increase the pressure between the two faces, which is difficult unless the two faces are forced externally to rotate against direction 28. Thus in absence of sufficient external forces the piston 3 and the cylinder head 2 will continue to rotate in the direction 28, by the pressure developed by the ignition of fuel, thus increasing the volume between the two faces 6 and 4. Thus the ignition of fuel or the power stroke will force the piston and thus the ring gear-1 to rotate in the direction 28. Here it is to be noted that in portion 43 and 45, the volume expansion between the faces 6 and 4 is possible only if the two ring gears rotates in the direction 28, which is same as direction 59. As the ring gear-2 and thus the cylinder heads are driven be the ring gear-1, the cylinder head follows the piston in the direction 59 keeping the speed relationship with the piston as constrained by the curve as shown in FIG. 3. During the power stroke, portion 43, the ring gear-2 and thus cylinder heads revolve slower than the piston and the ring gear-1. During the exhaust stroke, portion 44, the ring gear-2 and the cylinder heads revolve faster than the ring gear-1 and pistons, thus forcing the product of combustion out through the exhaust port. During the intake stroke, portion 45, the cylinder heads again revolve slower than the pistons thus increasing the volume between the faces 4 and 6 and thus sucks in the air or air fuel mixture through intake port. During the compression stroke, portion 46 and 47 together, the cylinder heads revolve faster than the pistons and thus reduces the volume between the faces 4 and 6 compressing the air or air fuel mixture and thus making it ready for combustion in power stroke. This above explained cycle repeats for other piston - cylinder head pair 9, 8 keeping 180° phase difference with the pair 3, 2. The faces 12 and 10 in pair 9, 8 are corresponding to the faces 6 and 4 in pair 3, 2. Portions 43, 44, 45, 46 and 47 in FIG.3, show the zones for ideal strokes for the revolving piston internal combustion engine; the actual start and end of a stroke is decided after considering dynamics of engine, fuel characteristics and many other parameters. Appropriate intake and exhaust valves can replace the intake and exhaust ports.

There can be more pairs of piston and cylinder head for one ring cylinder, or there can be only one pair of piston and cylinder head for one ring cylinder.

The mechanism that uses elliptical gears can be replaced by some other mechanism that can give desired variation in the speed of the cylinder head for constant piston speed; one such mechanism could be an appropriate four bar linkage operating as a double crank mechanism.

**Calculation for the compression ratio:**

In FIG.1 the volume between faces 4 and 6 can be assumed as the clearance volume in analogous to the reciprocating piston engine, as piston 3 and cylinder head 2 are in positions equivalent to the TDC in a conventional reciprocating piston engine. The volume between faces 18 and 19 can be taken as expanded volume as the piston 17 and cylinder head 16 are equivalent of BDC in conventional reciprocating piston engine. Similarly volume between faces 10 and 12 is clearance volume for another pair of piston 9 and cylinder head 8, and the volume between faces 22 and 23 is expanded volume as positions of piston and cylinder head 21 and 20 are the BDC equivalent position for piston 9 and cylinder head 8 respectively.

The compression ratio (CR) is the ratio of volume between faces 19 and 18 to that between faces 6 and 4.

In other words CR =(angle from 18 to 19)/(angle from 4 to 6);

$$CR =((\text{angle from 15 to 25})-(\text{angle from 14 to 24})+(\text{angle from 4 to 6}))$$
$$/(\text{angle from 4 to 6})$$

All the angles mentioned above are measured in the direction 28.

Angle from 15 to 25 is the ratio of rotation of elliptical gear 29 for the portion 43 to the speed ratio between elliptical gear and the ring gear-1. Similarly angle from 14 to 24 is the ratio of rotation of elliptical gear 31 for the portion 43 to the speed ratio between elliptical gear and the ring gear-2. These angles can be calculated from the geometry of the pitch ellipse as shown in FIG.2. The pitch ellipse used for the elliptical gears is having length of major axis (distance from 35 to 37 or 37 to 66) as 80 units and length of minor axis (distance from 64 to 67 or 65 to 68) as 74 units, thus the eccentricity is 0.3799671. For the TDC position, the two elliptical gears are shown by 33 and 34, having the instantaneous speed ratio between them as unity and thus in this position length between 32 and 69 is equal to the length between 30 and 69. Here 30 and 32 are the focal points of the respective ellipses and 69 represent the point of contact of the two pitch ellipses.

As the speed ratio between elliptical gears to ring gears is 2:1 and the pitch ellipses are symmetrical about their major and minor axes.

Angle from 15 to 25 = angle between lines 38-30 and 30-66

OR angle from 15 to 25 = angle between lines 65-30 and 30-66 = 112.332°

Similarly,

Angle from 14 to 24 = Angle between lines 36-32 and 32-37

= Angle between lines 64-32 and 32-35 = 67.668°

If we have clearance angle as 4°, then CR= (112.332-67.668+4)/(4) = 12.163

If the clearance angle is changed to 5° then for the same engine the CR becomes (112.332-67.668+5)/(5) = 9.9328

Thus it can be seen that just by changing the clearance angle the CR can be changed very easily. The CR can also be changed easily by selecting pitch ellipses with different eccentricity. It can be seen that lower the eccentricity of pitch ellipses, lesser is the CR obtained. It is to be noted here that, for the calculations faces 4, 6, 18, 19, etc. are assumed to be planer faces and the planes of the faces pass through the common axis of revolution.

**Calculation for output power:**

The volume between faces of 3 and 2 acts as the active volume. After TDC the charge between faces of 3 and 2 is ignited. As the result of combustion, the pressure between the faces of 3 and 2 increases and forces the volume between the faces to increase and thus forces the ring gears to rotate in CCW direction as shown in FIG.4. The theoretical power generated can be calculated with the standard power generation equation:

$$W = \int_{CV}^{CV*CR} p.dv$$

Where:

W = Work done OR power generated,
CV= clearance volume,
CR = compression ratio,
p = pressure of the active volume,
v = volume of the active volume.

Some power is always lost in compressing the air or air-fuel mixture in the active volume. Some power is also lost in accelerating and decelerating the ring gear-2 assembly supporting the revolving cylinder heads and associated linkages. The loss of power in acceleration and deceleration depends upon the total mass and inertia of the components undergoing speed variation. It is advisable to keep the mass and the inertia of such parts to a minimum as to reduce the losses. The difference between the power generated and the power lost becomes available for utilization outside the engine.

**Advantages of the Revolving Piston Engine:**

1. This concept revolving piston engine does not have any reciprocating part.

2. This engine is suitable for all types of fuels and different ignition methods those can be used in reciprocating piston engine. The combustion chamber can also be designed outside the ring cylinder.

3. Use of ports for intake and exhaust are possible instead of valves to operate, this makes the engine more robust. Thus in this way a four stroke engine can be made to work with ports.

4. While combustion takes place and while product of combustion expands the active volume between the corresponding faces of the piston and cylinder head revolves in the ring cylinder; thus creating a revolving heat source making cooling easy and efficient. This also provides more surface area available for cooling.

5. Large portion of the ring cylinder is fixed making it suitable for easy cooling by liquid coolant or any other cooling method.

6. Same ring cylinder can accommodate one to many pairs of pistons and cylinder heads allowing higher power generation possible for approximately same physical size of the engine. This also allows higher power to weight ratio obtainable with less modifications.

7. Vibration levels will be very low as the reciprocating components are absent and the pistons and cylinder heads can be arranged in such a way that they balance other pistons and cylinder heads within the same ring cylinder.

8. This engine can be used as an engine module. Similar engines can be put together in parallel with a common output shaft; thus it is easy to increase power output without much change in the design.

9. It is possible to use multiple engines at a time with a common output shaft to make an equivalent of multi-cylinder reciprocating piston engine. The engine can be designed for ease of interchangeability and thus making it possible to keep an engine as a spare and use it to replace a faulty engine in emergency with ease and with minimum down time required for the engine repair.

10. While using multiple engines, it is possible to arrange the different engines on same output shaft in a way as to have a power stroke in one engine overlapping compression stroke in other engine, for obtaining smooth power output and thus possibly reducing the size of the flywheel.

11. Instead of elliptical gear pair some other mechanism can be used to obtain desired differential velocity for the two ring gears supporting the pistons and cylinder heads. An ideal differential velocity pattern is that which will give maximum separation between the revolving piston and revolving cylinder head during power and intake strokes with minimum acceleration and deceleration keeping the clearance volume to a minimum.

12. It is possible to use the space between faces 7, 11 and faces 13, 5 for precompression of the separately filled air or air fuel mixture during intake stroke or power stroke and supplying it to the active volume between 6, 4 and 12, 10 appropriately during compression stroke. This can be used to increase the output power as in super charging of the engine.

13. A very compact engine can be made as it contains less number of parts.

14. It can be suitably designed to have less down time while repairing the engine.

15. The ring cylinder can have any suitable cross-section as required for easy manufacture and assembly.

16. The engine's expected life is longer as it has no reciprocating part and very effective cooling is possible. The engine heating is less because of revolving active volume.

17. It is possible to mount spark plug on to the piston itself to have better control on the ignition timing and thus eliminating the need of separate combustion chamber.

18. It is very easy to use this principle to develop a revolving piston compressor for that the ports or the valves are to be appropriately designed and relocated. In such applications portions 44, 46 and 47 are used for compression strokes and portions 43 and 45 are used for intake strokes. The input power is to be supplied to the ring gear-1.

## Claims

1. A revolving piston device, comprising at least one hollow ring cylinder (1), in which at least one piston pair (2, 3 and 8, 9) revolves around an axis (63) of the ring cylinder,
   wherein one piston (3 and 9) of the piston pair is connected to a first revolving assembly (15 or 49) and the other piston (2 and 8) of the piston pair is connected to a second revolving assembly (14 or 48), the space between the two pistons of the piston pair acts as controlled active volume,
   wherein the two revolving assemblies and thus the pistons connected to it, revolve with different speed profiles and complete one revolution almost simultaneously, wherein this differential speed between the two pistons (2, 3 and 8, 9) of the piston pair causes expansion and compression of the controlled active volume as one of the revolving assemblies is some times slower and some times faster than the other revolving assembly and some times both the revolving assemblies have same speed, and
   wherein one of the two revolving assemblies (15 or 49) drives the other (14 or 48) through positive drive (49, 50, 51, 53, 54, 56, 57, 48) that includes a linkage that decides the velocity profile and varying speed of one revolving assembly with respect to the other and revolve both the revolving assemblies in same direction (28 or 59),
   **characterized in that**
   the first revolving assembly (15 or 49) comprises a first ring gear (49) with either internal or external teeth and the second revolving assembly (14 or 48) comprises a second ring gear (48) with either internal or external teeth and the two revolving assemblies revolve around the axis (63) of the ring cylinder (1), wherein an output shaft is connected to one of the first and second ring gears (49, 48), and
   the linkage is mounted on fixed axes and consists of two elliptical gears in mesh (54, 56), with their fixed axes (55, 58) of rotation passing through one of their respective geometric focus points, wherein the elliptical gears have same pitch ellipses (29, 31).

2. The revolving piston device according to claim 1, wherein a fixed part of the ring cylinder (1) has intake port (27) and exhaust port (26) connected to it.

3. The revolving piston device according to claim 1 or 2, comprising one or more piston pairs, and for the case wherein only one or two pairs of pistons (2, 3 and 8, 9) are provided, for every revolution of the revolving assemblies (15 or 49, 14 or 48), the elliptical gears in mesh (54, 56) complete two revolutions.

4. The revolving piston device according to claim 1, 2 or 3, forming a revolving piston internal combustion engine by using different phases of the variation in the controlled active volume during the revolution of the two revolving assemblies (14 or 48, 15 or 49), appropriately as equivalent of intake stroke, compression stroke, power stroke and exhaust stroke; and wherein the actual combustion taking place within the controlled active volume or in a specially designed combustion chamber outside the controlled active volume.

5. The engine according to claim 4, in which the space between the revolving pistons of different piston pairs (2, 3 and 8, 9) is used for the purpose of precompression of air or air fuel mixture.

6. The engine according to claim 4 or 5, in which a spark plug is mounted on to one piston of the piston pair (2, 3 and 8, 9).

7. The engine according to claim 4, 5 or 6, that has a flywheel and the output shaft coupled to one of the two revolving assemblies (14 or 48, 15 or 49).

8. An engine arrangement comprising two or more of the engines according to any of claims 4 to 7 in parallel, with a common output shaft.

9. An engine arrangement according to claim 8, wherein the engines are arranged in such a way that a power stroke in one engine overlaps with a compression stroke in another engine or the engines are arranged in such a way that the power strokes in different engines take place at different timings.

10. The engine arrangement according to claim 8 or 9, wherein the engines are provided as separate engine modules and engine fittings are designed for interchangeability to allow use of a single separate engine as a spare for replacement of a faulty engine out of the engine arrangement.

11. The revolving piston device according to claim 1, 2 or 3, forming a revolving piston compressor using the expansion and compression of the controlled active volume appropriately and with ports designed specially for the purpose; one of the revolving assemblies (14 or 48, 15 or 49) is used to get the mechanical power input to the compressor.

12. A multistage or multi cylinder compressor comprising two or more of the revolving piston compressors according to claim 11 arranged in series or parallel, respectively.

**Patentansprüche**

1. Drehkolbenvorrichtung, umfassend zumindest einen hohlen Ringzylinder (1), in dem zumindest ein Kolbenpaar (2, 3 und 8, 9) um eine Achse (63) des Ringzylinders dreht,
wobei ein Kolben (3 und 9) des Kolbenpaars an eine erste Drehbaugruppe (15 oder 49) angeschlossen ist und der andere Kolben (2 und 8) des Kolbenpaars an eine zweite Drehbaugruppe (14 oder 48) angeschlossen ist, wobei der Raum zwischen den zwei Kolben des Kolbenpaars als gesteuertes aktives Volumen wirkt,
wobei die zwei Drehbaugruppen und dadurch die Kolben, die daran angeschlossen sind, mit verschiedenen Geschwindigkeitsprofilen drehen und eine Umdrehung nahezu gleichzeitig ausführen, wobei die Differenzialgeschwindigkeit zwischen den zwei Kolben (2, 3 und 8, 9) des Kolbenpaars Ausdehnung und Verdichtung des gesteuerten aktiven Volumens bewirkt, da eine der Drehbaugruppen bisweilen langsamer und bisweilen schneller als die andere Drehbaugruppe dreht und bisweilen die beiden Drehbaugruppen dieselbe Geschwindigkeit aufweisen, und
wobei eine der zwei Drehbaugruppen (15 oder 49) die andere (14 oder 48) durch Direktantrieb (49, 50, 51, 53, 56, 57, 48) antreibt, der eine Verbindung beinhaltet, welche das Schnelligkeitsprofil und die variierende Geschwindigkeit einer Drehbaugruppe bezüglich der anderen entscheidet und die beiden Drehbaugruppen in derselben Richtung (28 oder 59) dreht,

**dadurch gekennzeichnet, dass**

die erste Drehbaugruppe (15 oder 49) ein erstes Hohlrad (49) mit entweder inneren oder äußeren Zähnen umfasst und die zweite Drehbaugruppe (14 oder 48) ein zweites Hohlrad (48) mit entweder inneren oder äußeren Zähnen umfasst und die zwei Drehbaugruppen um die Achse (63) des Ringzylinders (1) drehen, wobei eine Abtriebswelle an eines des ersten und zweiten Hohlrads (49, 48) angeschlossen ist, und

die Verbindung auf festen Achsen angebracht ist und aus zwei elliptischen Zahnrädern in Eingriff (54, 56) miteinander bestehen, wobei ihre festen Drehachsen (55, 58) einen ihrer jeweiligen geometrischen Fokuspunkte durchlaufen, wobei die elliptischen Zahnräder gleiche Wälzellipsen (29, 31) aufweisen.

2. Drehkolbenvorrichtung nach Anspruch 1, wobei ein festes Teil des Ringzylinders (1) einen daran angeschlossenen Einlasskanal (27) und Auslasskanal (26) aufweist.

3. Drehkolbenvorrichtung nach einem der Ansprüche 1 oder 2, umfassend ein oder mehrere Kolbenpaare, und wobei für den Fall, in dem nur ein oder zwei Kolbenpaare (2, 3 und 8, 9) vorgesehen sind, die elliptischen Zahnräder in Eingriff (54, 56) miteinander für jede Umdrehung der Drehbaugruppen (15 oder 49, 14 oder 48) zwei Umdrehungen ausführen.

4. Drehkolbenvorrichtung nach Anspruch 1, 2 oder 3, ausbildend einen Drehkolbenverbrennungsmotor durch Nutzung verschiedener Phasen der Variation in dem gesteuerten aktiven Volumen während der Drehung der zwei Drehbaugruppen (14 oder 48, 15 oder 49), geeigneterweise als Äquivalent von Ansaughub, Verdichtungshub, Arbeitshub und Auslasshub; und wobei die eigentliche Verbrennung innerhalb des gesteuerten aktiven Volumens oder in einer speziell gestalteten Verbrennungskammer außerhalb des gesteuerten aktiven Volumens stattfindet.

5. Motor nach Anspruch 4, wobei der Raum zwischen den Drehkolben von verschiedenen Drehkolbenpaaren (2, 3 und 8, 9) zum Zweck der vorverdichtung von Luft oder Luft-Brennstoff-Gemisch benutzt ist.

6. Motor nach Anspruch 4 oder 5, wobei eine Zündkerze auf dem einen Kolben des Kolbenpaars (2, 3 und 8, 9) angebracht ist.

7. Motor nach Anspruch 4, 5 oder 6, der ein Schwungrad und die Abtriebswelle an eine der Drehbaugruppen (14 oder 48, 15 oder 49) gekuppelt aufweist.

8. Motoranordnung, umfassend zwei oder mehr der Motoren nach einem der Ansprüche 4 bis 7 in Reihe mit einer gemeinsamen Abtriebswelle.

9. Motoranordnung nach Anspruch 8, wobei die Motoren derart angeordnet sind, dass sich ein Arbeitshub in einem Motor mit einem Verdichtungshub in einem anderen Motor überdeckt, oder die Motoren derart angeordnet sind, dass die Arbeitshübe in verschiedenen Motoren in verschiedenen Zeitintervallen stattfinden.

10. Motoranordnung nach Anspruch 8 oder 9, wobei die Motoren als separate Motormodule bereitgestellt sind und Motoranschlussstücke auf Austauschbarkeit ausgelegt sind, um die Benutzung eines einzelnen separaten Motors als Reserve zum Ersetzen eines defekten Motors aus der Motoranordnung zu ermöglichen.

11. Drehkolbenvorrichtung nach Anspruch 1, 2 oder 3, ausbildend einen Drehkolbenverdichter unter geeigneter Nutzung der Ausdehnung und Verdichtung des gesteuerten aktiven Volumens und mit Kanälen, die speziell für diesen Zweck gestaltet sind; wobei eine der Drehbaugruppen (14 oder 48, 15 oder 49) zum Zuführen der mechanischen Eingangsleistung zum Verdichter benutzt ist.

12. Mehrstufen- oder Mehrzylinderverdichter, umfassend zwei oder mehr der Drehkolbenverdichter nach Anspruch 11, die in Reihe bzw. parallel angeordnet sind.

**Revendications**

1. Dispositif à piston alternatif, comprenant au moins un cylindre annulaire creux (1), dans lequel au moins une paire de pistons (2,3 et 8,9) tourne autour d'un axe (63) du cylindre annulaire, dans lequel un piston (3 et 9) de la paire de pistons est raccordé à un premier ensemble alternatif (15 ou 49) et l'autre piston (2 et 8) de la paire de pistons est raccordé à un second ensemble alternatif (14 ou 48), l'espace entre les deux pistons de la paire de pistons agit comme un volume actif commandé,

dans lequel les deux ensembles alternatifs et donc les pistons qui y sont raccordés tournent à des profils de vitesse différents et parachèvent une révolution presque simultanément, dans lequel la vitesse différentielle entre les deux pistons (2,3 et 8,9) de la paire de pistons provoque l'expansion et la compression du volume actif commandé puisque un des ensembles alternatifs est parfois plus lent et parfois plus rapide que l'autre ensemble alternatif et parfois les deux ensembles alternatifs ont la même vitesse, et dans lequel un des deux ensembles alternatifs (15 ou 49) entraîne l'autre (14 ou 48) par entraînement positif (49,50,51,53,54,57,58) qui inclut une tringlerie qui décide du profil de vitesse et de la vitesse variable d'un ensemble alternatif par rapport à l'autre et fait tourner les ensembles alternatifs dans la même direction (28 ou 59),

**caractérisé en ce que**

le premier ensemble alternatif (15 ou 49) comprend une première couronne dentée de volant (49) avec des dents soit internes, soit externes et le second ensemble alternatif (14 ou 48) comprend une seconde couronne dentée de volant (48) avec des dents soit internes, soit externes et les deux ensembles alternatifs tournent autour de l'axe (63) du cylindre annulaire (1), dans lequel l'arbre de sortie est raccordé à un de la première et la seconde couronnes dentées de volant (49,48), et

la tringlerie est montée sur des axes fixes et est constituée de deux engrenages elliptiques qui s'engrènent (54,56), avec leurs axes fixes (55,58) de rotation passant à travers un de leurs points de focalisation géométrique respectif, dans lequel les engrenages elliptiques ont les mêmes ellipses de pas (29,31).

2. Dispositif à piston alternatif selon la revendication 1, dans lequel une partie fixe du cylindre annulaire (1) comporte un port d'admission (27) et un port d'échappement (26) qui lui sont raccordés.

3. Dispositif à piston alternatif selon la revendications 1 ou 2, comprenant une ou plusieurs paires de pistons, et pour le cas où seulement une ou deux paires de pistons (2,3 et 8,9) sont prévues, pour chaque révolution des ensembles alternatifs (15 ou 49, 14 ou 48), les engrenages elliptiques qui s'engrènent (54,56) parachèvent deux révolutions.

4. Dispositif à piston alternatif selon la revendication 1,2 ou 3, formant un moteur à combustion interne à piston alternatif en utilisant différentes phases de la variation du volume actif commandé pendant la révolution des deux ensembles alternatifs (14 ou 48, 15 ou 49), de manière appropriée comme équivalent de la course d'admission, la course de compression, la course de combustion et la course d'échappement ; et dans lequel la combustion effective ayant lieu à l'intérieur du volume actif commandé ou dans une chambre de combustion spécialement conçue à l'extérieur du volume actif commandé.

5. Moteur selon la revendication 4, dans lequel l'espace entre les pistons alternatifs de différentes paires de pistons (2, et 8,9) est utilisée à des fins de pré-compression d'air ou d'un mélange air carburant.

6. Moteur selon la revendication 4 ou 5, dans lequel une bougie d'allumage est montée sur un piston de la paire de pistons (2,3 et 8,9).

7. Moteur selon la revendication 4,5 ou 6, qui comporte un volant et l'arbre de sortie couplé à un des deux ensembles alternatifs (14 ou 48, 15 ou 49).

8. Agencement de moteur comprenant deux ou plusieurs des moteurs selon une quelconque des revendications 4 à 7 en parallèle, avec un arbre de sortie commun.

9. Agencement de moteur selon la revendication 8, dans lequel les moteurs sont agencés de sorte qu'une course de combustion dans un moteur se superpose à une course de compression dans un autre moteur ou les moteurs sont agencés de telle sorte que les courses de combustion dans différents moteurs aient lieu à des synchronisations différentes.

10. Agencement de moteur selon la revendication 8 ou 9, dans lequel les moteurs sont prévus comme des modules de moteur séparés et des raccords de moteur sont conçus à des fins d'interchangeabilité afin de permettre une utilisation unique d'un moteur séparé individuel comme une pièce de rechange pour le remplacement d'un moteur défectueux hors de l'agencement de moteur.

11. Dispositif à piston alternatif selon la revendication 1,2 ou 3, formant un compresseur à piston alternatif utilisant l'expansion et la compression du volume actif commandé de manière appropriée et comportant des ports spécialement conçus dans le but qu'un des ensembles alternatifs (14 ou 48, 15 ou 49) soit utilisé pour entrer la puissance mécanique dans le compresseur.

12. Compresseur multi-étages ou multi-cylindres comprenant deux ou plusieurs des compresseurs à piston alternatif selon la revendication 11 agencés en série ou en parallèle, respectivement.

FIG. 1

FIG. 2

FIG. 3

EP 1 623 096 B1

FIG. 4

**EP 1 623 096 B1**

**REFERENCES CITED IN THE DESCRIPTION**

**Patent documents cited in the description**

- US 2071528 A
- GB 499553 A
- US 6457452 B1
- DE 19814742 C1
- US 3769946 A